# EUROPÄISCHE PATENTSCHRIFT

(11) **EP 1 816 043 B1**
(45) Veröffentlichungstag und Bekanntmachung des Hinweises auf die Patenterteilung: **15.06.2011**
(21) Anmeldenummer: 06126671.4
(22) Anmeldetag: 20.12.2006
(51) Int. Cl.: B60S 1/40, B60S 1/32

(54) **Wischerarm, insbesondere für ein Kraftfahrzeug**
Wiper arm, in particular for a motor vehicle
Bras d'essuie-glace, en particulier pour un véhicule automobile

(30) Priorität: 02.02.2006 DE 102006004773; 27.03.2006 DE 102006013965
(43) Veröffentlichungstag der Anmeldung: 08.08.2007
(73) Patentinhaber: ROBERT BOSCH GMBH, 70442 Stuttgart (DE)
(72) Erfinder: Wilms, Christian, 3582 Koersel-Beringen (BE); Verelst, Hubert, 3300 Tienen (BE); Bratec, Hervé, 3012 Wilsele (BE)

(56) Entgegenhaltungen:
- WO-A1-01/40033
- DE-A1- 10 308 785
- DE-A1- 19 750 190
- DE-A1- 19 833 939
- US-B1- 6 739 018

## Beschreibung

### Stand der Technik

Die Erfindung betrifft einen Wischerarm, insbesondere für ein Kraftfahrzeug, nach Gattung des unabhängigen Anspruchs.

Aus dem Dokument DE 103 08 785, das den Gegenstand des Oberbegriffes des Anspruchs 1 offenbart, A1 ist eine Wischvorrichtung bekannt, bei der an dem Wischerarm ein Spoilerelement zur Erzeugung einer strömungsbedingten Auflagekraft ausgebildet ist. Durch diesen Spoiler wird erreicht, dass die Strömung des Fahrtwindes auf der Anströmseite des Spoilers so auf den Wischerarm einwirkt, dass auch bei höheren Fahrgeschwindigkeiten ein optimales Wischergebnis erzielt wird.

Es sind schon zahlreiche Wischerarme für Scheiben von Kraftfahrzeugen, beispielsweise aus der DE-A-19750190 bekannt. Diese Wischerarme weisen eine Längserstreckung auf, entlang derer ein erstes Ende zur Befestigung an einer Wischerwelle des Kraftfahrzeugs und ein zweites Ende zum Befestigen eines Wischblattes vorgesehen ist. Zwischen den beiden Enden ist ein Mittelabschnitt ausgebildet, der im Querschnitt eine in montiertem Zustand in Fahrtrichtung des Kraftfahrzeugs weisende Anströmseite, sowie eine, entlang der Fahrtrichtung betrachtet der Anströmseite gegenüberliegende, Abströmseite aufweist. Im Betrieb drückt der Wischerarm durch eine im Wischerarm befindliche Zugfeder das Wischblatt mit einer definierten Kraft gegen die Oberfläche der Scheibe. Durch den auf die Anströmseite des Wischerarms anströmenden Fahrtwind wird diese Kraft reduziert, weshalb vielfach vorgeschlagen wurde, den Wischerarm spoilerartig auszugestalten.

### Offenbarung der Erfindung

Der erfindungsgemäße Wischerarm mit den Merkmalen des Hauptanspruchs hat den Vorteil, dass durch einen Mittelabschnitt auf der Anströmseite, der im Querschnitt als Keilabschnitt mit einem Rückenschenkel, einem Endschenkel und einem Keilscheitel ausgebildet ist, die Strömung des Fahrtwindes auf der Anströmseite derart gelenkt ist, dass auch bei höheren Fahrgeschwindigkeiten ein optimales Wischergebnis erzielt wird.

Hierbei ist es weiterhin besonders vorteilhaft, wenn der anströmende Fahrtwind die Wirkung eines auf dem Wischblatt selbst angeordneten Spoilers nicht beeinträchtigt oder sogar verbessert.

Durch die in den Unteransprüchen aufgeführten Maßnahmen ergeben sich vorteilhafte Weiterbildungen und Verbesserungen der im Hauptanspruch angegebenen Merkmale.

Besonders vorteilhaft ist es, wenn zwischen Rückenschenkel und Endschenkel ein Keilwinkel eingeschlossen ist, der kleiner oder gleich 90 Grad, insbesondere kleiner als 85 Grad, vorzugsweise kleiner als 75 Grad, ist. Auf diese Weise ergibt sich ein optimales Anströmverhalten des erfindungsgemäßen Wischerarms. Weiterhin vorteilhaft ist ein Keilwinkel größer als 45 Grad, insbesondere größer als 60 Grad, vorzugsweise größer als 75 Grad

Eine besonders hohe Stabilität sowie ein verbessertes Strömungsverhalten wird weiterhin dadurch erreicht, dass zwischen Anströmseite und Abströmseite ein Rücken vorgesehen ist, der in montiertem Zustand insbesondere parallel zur Scheibe angeordnet ist.

Hierbei ist es von besonderem Vorteil, wenn der Rückenschenkel und der Rücken einen Winkel bilden, der größer als 0 Grad, insbesondere größer als 15 Grad, vorzugsweise größer 35 Grad oder gleich 45 Grad ist. Ebenso vorteilhaft ist der Winkel kleiner als 90 Grad, insbesondere kleiner als 80 Grad, vorzugsweise kleiner als 60 Grad.

Das Strömungsverhalten wird weiterhin dadurch verbessert, dass der Endschenkel mit dem Rücken einen Winkel einschließt, der kleiner als 95 Grad, insbesondere kleiner als 75 Grad, vorzugsweise kleiner oder gleich 50 Grad, beträgt. Ebenso vorteilhaft ist der der Winkel größer als 20 Grad, insbesondere größer als 35 Grad, vorzugsweise größer oder gleich 45 Grad.

Eine verbesserte Stabilität sowie ein verbessertes Strömungsverhalten wird auch dadurch erzielt, dass das sich vom Rücken ausgehend eine Rückseite erstreckt, die mit dem Rücken einen Winkel von etwa 90 Grad, insbesondere zwischen 85 und 110 Grad, vorzugsweise zwischen 90 und 100 Grad, einschließt.

In einer einfachen Ausführung weist der Wischerarm entlang der Längserstreckung ein Gelenk zum Umklappen auf, wobei der Mittelabschnitt zwischen Gelenk und zweitem Ende angeordnet ist.

Eine weitere Verbesserung wird dadurch erzielt, dass der Abstand im Querschnitt zwischen einer durch den Rücken gebildeten Ebene und dem Keilscheitel größer ist als der Abstand zwischen der Ebene und dem freien Ende der Rückseite.

In einer besonders einfachen und kostengünstigen Ausführung ist der Mittelabschnitt aus Blech, insbesondere als Stanz-Biege-Teil, oder aus Kunststoff ausgebildet.

### Zeichnungen

Ein Ausführungsbeispiel der Erfindung ist in den Zeichnungen dargestellt und in der nachfolgenden Beschreibung näher erläutert. Es zeigen:
Figur 1 einen erfindungsgemäßen Wischerarm in einer schematischen, perspektivischen Darstellung und
Figur 2 einen Querschnitt durch einen erfindungsgemäßen Wischerarm in einer schematischen Darstellung.

### Beschreibung des Ausführungsbeispiels

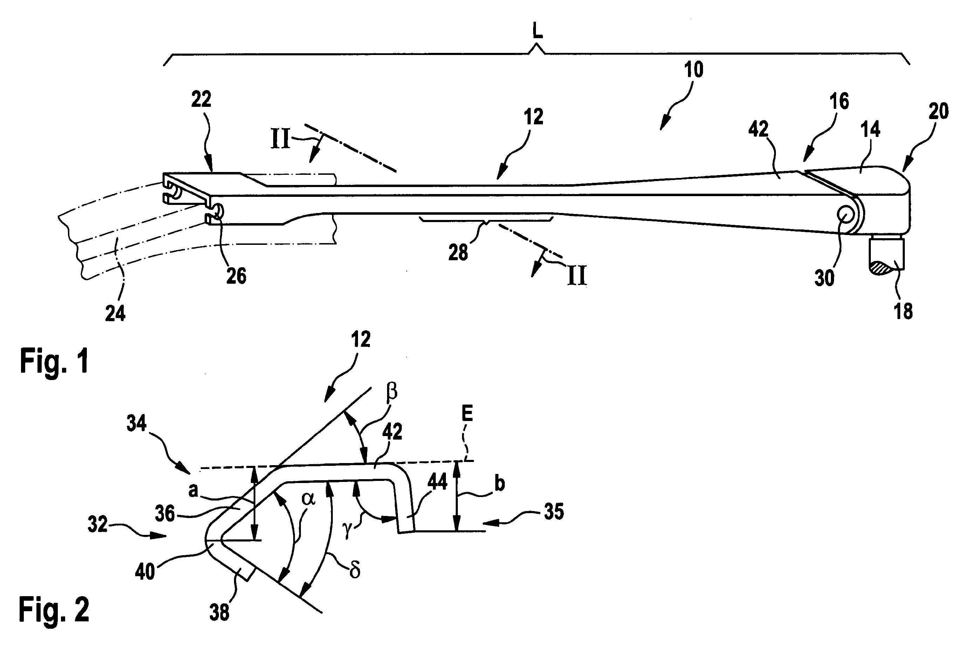

In Figur 1 ist ein erfindungsgemäßer Wischerarm 10 in einer perspektivischen Darstellung gezeigt. Dieser umfasst im Wesentlichen ein Gelenkteil 12 und ein Befestigungsteil 14, die über ein Gelenk 16 miteinander derart verbunden sind, dass das Gelenkteil 12 gegenüber dem Befestigungsteil 14 verklappt werden kann. Typischerweise ist zwischen Gelenkteil 12 und Befestigungsteil 14 eine hier der Übersichtlichkeit halber nicht eingezeichnete Feder als Verspannungselement gespannt, so dass in montiertem Zustand zwischen Gelenkteil 12 und Befestigungsteil 14 eine Vorspannung entsteht. Das Befestigungsteil 14 ist an einer Wischerwelle 18 befestigt, welche im Betrieb eine Pendelbewegung ausführt. Der Wischerarm 10 pendelt dadurch im Betrieb um die Wischerwelle 18 in einer Ebene, die etwa parallel zur Oberfläche einer zu wischenden Scheibe ist, die hier aus Gründen der Übersichtlichkeit nicht gezeichnet ist.

Der Wischerarm 10 weist eine Längserstreckung L auf, entlang derer ein erstes Ende 20 vorgesehen ist, an dem der Wischerarm 10 an der Wischerwelle 18 befestigt ist. Weiterhin weist der Wischerarm 10 entlang seiner Längserstreckung ein dem ersten Ende 20 abgewandtes zweites Ende 22 auf, an dem ein Wischblatt 24 befestigt werden kann. Hierzu ist ein Befestigungsmittel 26 vorgesehen, welches aus Ösen, wie hier eingezeichnet, oder aber aus Haken oder Stiften oder anderen Befestigungselementen bestehen kann. Im gezeichneten Beispiel sind zwei Ösen vorgesehen, die einen nicht gezeichneten Stift aufzunehmen vermögen, sodass das Wischblatt 24 in einer zur Pendelachse der Wischerwelle 18 parallelen Ebene zu pendeln vermag. Zwischen dem ersten Ende 20 und dem zweiten Ende 22 ist ein Mittelabschnitt 28 vorgesehen, der zwischen dem Gelenk 16 und dem zweiten Ende 22 angeordnet ist.

Das Gelenk 16 umfasst hierbei einen Gelenkbolzen 30, der das Befestigungsteil 14 und das Gelenkteil 12 miteinander verbindet und somit eine Drehachse zum Verklappen bildet. Das Gelenkteil 18 ist damit in einer zur Wischerwelle 18 parallelen Ebene verklappbar.

In Figur 2 ist der Mittelabschnitt 28 des Gelenkteils 12 des erfindungsgemäßen Wischerarms 10 im Querschnitt dargestellt. Dieser Mittelabschnitt 28 weist eine Anströmseite 32 auf, die in montierter Position an einem Kraftfahrzeug der Fahrtrichtung zugewandt ist. Der Fahrtwind trifft dann auf diese Anströmseite 32 auf. Auf der der Anströmseite 32 im Querschnitt gegenüberliegenden Seite ist die Abströmseite 35 des Wischerarms 10 gebildet.

Das Gelenkteil 12 weist auf seiner Anströmseite 32 einen Keilabschnitt 34 auf, der im Wesentlichen einen Rückenschenkel 36 und einen Endschenkel 38 umfasst, die durch einen Keilscheitel 40 verbunden sind. An den Rückenschenkel 36 schließt sich ein Rücken 42 an. Dieser ist im Wesentlichen senkrecht zur Pendelachse der Wischerwelle 18 (Figur 1) und damit etwa parallel zu der zu wischenden Scheibe verlaufend.

Endschenkel 38 und Rückenschenkel 36 schließen einen Keilwinkel α ein, der etwa 80 Grad beträgt. Die Winkelhalbierende dieses Winkels verläuft etwa parallel zum Rücken 42 oder schneidet die durch den Rücken 42 gebildete Ebene E auf der Anströmseite 32.

Der Rückenschenkel 36 und der Rücken 42 bilden ebenso einen Winkel β, der etwa 40 Grad beträgt. Der Winkel β ist hierbei der spitze Winkel, den der Rückenschenkel 36 mit der durch den Rücken 42 gebildeten Ebene E im Querschnitt einschließt. Je nach Ausprägung des Wischblattes 24, welches üblicherweise selbst einen Spoiler aufweist, können der Keilwinkel α und der Winkel β entsprechend variiert werden. Der Endschenkel 38 schließt mit dem Rücken 42 hierbei einen Winkel δ ein, der etwa 95 Grad beträgt. Auch dieser Winkel kann variiert werden, insbesondere in Abhängigkeit des verwendeten Wischblattes 24.

Auf der im Querschnitt dem Rückenschenkel 36 abgewandten Seite des Rückens 42 ist eine Rückseite 44 vorgesehen, die sich ausgehend vom Rücken 42 nach unten in Richtung der hier nicht gezeichneten Scheibe erstreckt. Rücken 42 und Rückseite 44 schließen hierbei einen Winkel γ ein, der zwischen 85 und 95 Grad beträgt. Die Rückseite 44 ist hier zweiteilig ausgebildet, so daß ein erster, an den Rücken 42 direkt anschließender Abschnitt und ein zweiter, sich an den ersten Abschnitt anschließender Abschnitt gebildet ist. Der erste Abschnitt schließt mit dem Rücken 42 einen Winkel von etwa 95 Grad ein. Der zweite Abschnitt schließt mit dem Rücken 42 einen Winkel von etwa 90 Grad ein. In einer Variation der Erfindung kann der erste Abschnitt auch einen Winkel von etwa 100 Grad mit dem Rücken 42 einschließen und der zweite Abschnitt einen Winkel von bis zu 60 Grad, vorzugsweise zwischen 60 Grad und 160 Grad mit dem Rücken 42 einschließen.

Von der durch den Rücken 42 gebildeten Ebene E weist der Keilscheitel 40 einen Abstand a auf, der größer ist als der Abstand b zwischen der Ebene E und dem freien Ende der Rückseite 44. In einer Variation der Erfindung können dies Abstände a, b jedoch auch gleich sein. Ebenso kann der Abstand b auch größer sein, als der Abstand a.

Der Mittelabschnitt 28 kann sich über fast die gesamte Längserstreckung L des Wischerarms 10 erstrecken. In einer Variation der Erfindung kann sich der Mittelabschnitt 28 aber auch nur über ein Viertel oder ein Drittel der Längserstreckung des Wischerarms 10 erstrecken. Insbesondere kann sich der Mittelabschnitt 28 auch auf den Abschnitt des Wischerarms 10 erstrecken, in dessen Bereich das Wischblatt 24 verläuft. In einer weiteren Variation der Erfindung erstreckt sich der Mittelabschnitt 28 über mehr als die hälfte der Länge des Gelenkteils 12, insbesondere derart, daß der überwiegende Teil der Länge des Mittelabschnitts 28 in der dem zweiten Ende 22 zugewandten Hälfte des Gelenkteils 12 verläuft.

Das Wischblatt 24 ist hierbei als so genanntes Flachbalkenwischblatt ausgebildet, welches im Wesentlichen eine Federschiene umfasst, auf deren scheibenzugewandter Seite eine Wischlippe und auf deren scheibenabgewandter Seite ein Spoiler befestigt ist. Mit derartigen Wischblättem, die von BOSCH unter der Bezeichnung "Aerotwin" bekannt geworden sind, wird im Zusammenwirken mit dem erfindungsgemäßen Wischerarm 10 ein optimales Wischergebnis erzielt.

In einer weiteren Variation der Erfindung kann der Rücken 42, der Rückenschenkel 36 oder der Endschenkel 38 jeweils einzeln oder in ihrer Kombination auch konvex oder konkav ausgebildet sein. Die angegebenen Winkel beziehen sich in diesem Fall auf dem mittleren Tangentenwinkel, insbesondere in mittleren Querschnittsbereich.

## Patentansprüche

1. Wischerarm (10), insbesondere für eine Scheibe eines Kraftfahrzeugs, mit einer Längserstreckung (L), entlang derer ein erstes Ende (20) zur Befestigung an einer Wischerwelle (18) und ein zweites Ende (22), zum Befestigen eines Wischblatts (24) vorgesehen ist, zwischen denen mindestens ein Mittelabschnitt (28) ausgebildet ist, der im Querschnitt eine, in montiertem Zustand in Fahrtrichtung des Kraftfahrzeugs weisende Anströmseite (32) und eine im Querschnitt der Anströmseite (32) gegenüberliegende Abströmseite (35) aufweist, und auf der Anströmseite (32) im Querschnitt einen Keilabschnitt (34) mit einem Rückenschenkel (36), einem Endschenkel (38) und einem Keilschenkel (40) aufweist, wobei zwischen Anströmseite (32) und Abströmseite (35) ein Rücken (42) vorgesehen ist, der in montiertem Zustand insbesondere parallel zur Scheibe angeordnet ist und sich vom Rücken (42) ausgehend eine Rückseite (44) erstreckt, die zumindest teilweise mit dem Rücken (42) einen Winkel (γ) von etwa 90 Grad, insbesondere zwischen 85 Grad und 110 Grad, insbesondere zwischen 90 und 100 Grad einschließt, **dadurch gekennzeichnet, dass** im Querschnitt der Abstand a zwischen einer durch den Rücken (42) gebildeten Ebene (E) und dem Keilscheitel (40) größer ist als der Abstand b zwischen der Ebene und dem freien Ende der Rückseite (44).

2. Wischerarm (10) nach Anspruch 1, **dadurch gekennzeichnet, dass** der Keilabschnitt (34) zwischen Rückenschenkel (36) und Endschenkel (38) einen Keilwinkel (α) aufweist, der kleiner oder gleich 90 Grad, insbesondere kleiner als 85 Grad, vorzugsweise kleiner als 75 Grad ist.

3. Wischerarm (10) nach Anspruch 2, **dadurch gekennzeichnet, dass** der Rückenschenkel (36) und der Rücken (42) einen Winkel (β) bilden, der größer als 0 Grad, insbesondere größer als 15 Grad, vorzugsweise größer 35 Grad oder gleich 45 Grad und insbesondere kleiner als 80 Grad ist.

4. Wischerarm (10) nach Anspruch 2, **dadurch gekennzeichnet, dass** der Endschenkel (38) mit dem Rücken (42) einen Winkel (ö) einschließt, der kleiner als 95 Grad, insbesondere als 75 Grad, vorzugsweise kleiner oder gleich 50 Grad, beträgt.

5. Wischerarm (10) nach einem der vorhergehenden Ansprüche, **dadurch gekennzeichnet, dass** entlang der Längserstreckung (L) ein Gelenk (16) zum Umklappen vorgesehen ist und der mindestens eine Mittelabschnitt (28) zwischen Gelenk (16) und zweitem Ende (22) angeordnet ist.

6. Wischerarm (10) nach einem der vorhergehenden Ansprüche, **dadurch gekennzeichnet, dass** der Mittelabschnitt (28) aus Blech, insbesondere als Stanz-Biege-Teil, oder aus Kunststoff ausgebildet ist.

## Claims

1. Wiper arm (10), in particular for a window of a motor vehicle, with a longitudinal extent (L) along which a first end (20) for fastening to a wiper shaft (18) and a second end (22) for the fastening of a wiper blade (24) is provided, between which ends at least one central section (28) is formed, the central section having, in cross section, an incident-flow side (32) which, in the fitted state, faces in the direction of travel of the motor vehicle and a flow-discharge side (35) which, in cross section, is opposite the incident-flow side (32), and having, in cross section on the incident-flow side (32), a wedge section (34) with a back limb (36), an end limb (38) and a wedge limb (40), wherein a back (42) is provided between the incident-flow side (32) and flow-discharge side (35), said back, in the fitted state, in particular being arranged parallel to the window and a rear side (44) extends from the back (42) and at least partially encloses with the back (42) an angle (γ) of approximately 90 degrees, in particular between 85 degrees and 110 degrees, in particular between 90 and 100 degrees, **characterized in that**, in cross section, the distance a between a plane (E) formed by the back (42) and the wedge apex (40) is greater than the distance b between the plane and the free end of the rear side (44).

2. Wiper arm (10) according to Claim 1, **characterized in that** the wedge section (34) has, between the back limb (36) and end limb (38), a wedge angle (α) which is smaller than or equal to 90 degrees, in particular is smaller than 85 degrees, and preferably smaller than 75 degrees.

3. Wiper arm (10) according to Claim 2, **characterized in that** the back limb (36) and the back (42) form an angle (β) which is greater than 0 degrees, in particular greater than 15 degrees, preferably greater than 35 degrees or is equal to 45 degrees, and in particular is smaller than 80 degrees.

4. Wiper arm (10) according to Claim 2, **characterized in that** the end limb (38) encloses with the back (42) an angle (δ) which is smaller than 95 degrees, in particular than 75 degrees, and is preferably smaller than or equal to 50 degrees.

5. Wiper arm (10) according to one of the preceding claims, **characterized in that** a joint (16) for folding-over purposes is provided along the longitudinal extent (L), and the at least one central section (28) is provided between the joint (16) and second end (22).

6. Wiper arm (10) according to one of the preceding claims, **characterized in that** the central section (28) is formed from sheet metal, in particular in the form of a punched and bent part, or from plastic.

## Revendications

1. Bras d'essuie-glace (10), en particulier pour une vitre d'un véhicule automobile, comprenant une étendue longitudinale (L) le long de laquelle une première extrémité (20) est prévue pour être fixée à un arbre d'essuie-glace (18) et une deuxième extrémité (22) est prévue pour la fixation d'un balai d'essuie-glace (24), entre lesquelles au moins une portion centrale (28) est réalisée, laquelle présente, en section transversale, un côté d'afflux (32) tourné dans l'état monté dans la direction de conduite du véhicule automobile, et un côté de sortie (35) opposé, en section transversale, au côté d'afflux (32), et sur le côté d'afflux (32), en section transversale, présente une portion de clavette (34) avec une branche de dos (36), une branche terminale (38) et une branche de clavette (40), entre le côté d'afflux (32) et le côté de sortie (35) étant prévu un dos (42), qui, dans l'état monté, est disposé en particulier parallèlement à la vitre, et un côté arrière (44) s'étend depuis le dos (42), lequel forme au moins en partie avec le dos (42) un angle (γ) d'environ 90 degrés, notamment compris entre 85 et 110 degrés, notamment entre 90 et 100 degrés, **caractérisé en ce qu'**en section transversale, la distance a entre un plan (E) formé par le dos (42) et le sommet de clavette (40) est supérieure à la distance b entre le plan et l'extrémité libre du côté arrière (44).

2. Bras d'essuie-glace (10) selon la revendication 1, **caractérisé en ce que** la portion de clavette (34) présente entre la branche de dos (36) et la branche terminale (38) un angle de clavette (α) qui est inférieur ou égal à 90 degrés, en particulier qui est inférieur à 85 degrés, de préférence inférieur à 75 degrés.

3. Bras d'essuie-glace (10) selon la revendication 2, **caractérisé en ce que** la branche de dos (36) et le dos (42) forment un angle (β) qui est supérieur à 0 degrés, en particulier qui est supérieur à 15 degrés, de préférence supérieur à 35 degrés ou égal à 45 degrés, et en particulier qui est inférieur à 80 degrés.

4. Bras d'essuie-glace (10) selon la revendication 2, **caractérisé en ce que** la branche terminale (38) forme avec le dos (42) un angle (δ) qui est inférieur à 95 degrés, notamment à 75 degrés, de préférence qui est inférieur ou égal à 50 degrés.

5. Bras d'essuie-glace (10) selon l'une quelconque des revendications précédentes, **caractérisé en ce que** le long de l'étendue longitudinale (L) est prévue une articulation (16) pour le rabattement et l'au moins une portion centrale (28) est disposée entre l'articulation (16) et la deuxième extrémité (22).

6. Bras d'essuie-glace (10) selon l'une quelconque des revendications précédentes, **caractérisé en ce que** la portion centrale (28) est réalisée en tôle, en particulier en tôle estampée cintrée, ou en plastique.
